## Europäisches Patentamt

## European Patent Office

## Office européen des brevets

(19)

(11) Veröffentlichungsnummer: **0 146 644**

**A1**

(12)

# EUROPÄISCHE PATENTANMELDUNG

(21) Anmeldenummer: **83112282.5**

(22) Anmeldetag: **07.12.83**

(51) Int. Cl.⁴: **H 04 N 5/225**

(43) Veröffentlichungstag der Anmeldung:
**03.07.85 Patentblatt 85/27**

(84) Benannte Vertragsstaaten:
**AT BE CH DE FR GB IT LI NL SE**

(71) Anmelder: **Lemke GmbH**
**Indusriestrasse 48**
**D-8038 Gröbenzell bei München(DE)**

(72) Erfinder: **Lemke, Norbert**
**Industriestrasse 48**
**D-8038 Gröbenzell(DE)**

(74) Vertreter: **Wenzel, Joachim, Dipl.-Ing.**
**Hauptmannsreute 46**
**D-7000 Stuttgart 1(DE)**

(54) **Miniatur-Fernsehkamera und Monitor-Bildschirmeinheit hierfür.**

(57) Die Erfindung betrifft eine Fernsehkamera für sehr kleine Abmessungen und eine Monitor-Bildschirmeinheit hierfür.

Gemäß der Erfindung wird hierzu vorgeschlagen, daß die Kameraröhre eine 1 1/2-Zollröhre ist und daß die inneren Abmessungen der Kamera eine lichte Weite haben, die dem stärksten Durchmesser der Kamera so angepaßt sind, daß die Röhre durch die vordere Öffnung des Gehäuses einführbar ist. Dadurch werden die Abmessungen der Kamera noch kleiner als bisher. Deshalb ist eine wesentlich kleinere Lichtstärke zur Beleuchtung des Beobachtungsfeldes ausreichend.

Hierzu wird ferner die Monitor-Bildschirmeinheit so ausgebildet, daß in oder an dem Gehäuse des Monitor-Bildschirms ein zusätzliches Gehäuse zur Aufnahme der elektronischen Teile der Kamera angeordnet sind. Dadurch wird ebenfalls die Fernsehkamera in ihren Abmessungen verkleinert, weil sie diese elektronischen Teile nicht aufzunehmen braucht.

Es werden auch weitere Merkmale vorgeschlagen, durch die eine große Kompaktheit sowohl der Fernsehkamera als auch der Monitorbildschirmeinheit erreicht wird.

FIG. 1

Croydon Printing Company Ltd.

**0146644**

*I*

<u>Lemke GmbH, 8038 Gröbenzell bei München</u>

Miniatur-Fernsehkamera und

<u>Monitor-Bildschirmeinheit hierfür</u>

Die Erfindung betrifft eine Fernsehkamera für sehr kleine Abmessungen nach dem Oberbegriff des Anspruchs 1 sowie eine Monitor-Bildschirmeinheit hierfür.

Die bekannten Fernsehkameras dieser Art zeigen den Nachteil, daß eine große Lichtfontäne erforderlich ist, um , insbesondere bei medizinischen Anwendungen, das Beobachtungsfeld aufzuhellen. Obschon es sich hierbei um sogenanntes "Kaltlicht" handelt, wird dadurch doch der Beobachtungsbereich durch die mit dem Licht verbundene Wärme erheblich angewärmt, was für den Patienten eine zusätzliche Belastung bedeutet.

Bei der Herstellung derartiger Fernsehkameras ist es ferner üblich, zunächst einen Befestigungsrahmen zu schaffen, der die Kameraröhre und alle Komponenten wie die elektronische Schaltvorrichtung und sonstige Bauteile aufnimmt und hält. Anschließend wird das Gehäuse über die so geschaffene gesamte Einheit gescho-

*/-7*

0146644

2.

ben und von außen mit Schrauben befestigt. Dadurch zeigt die Kamera eine Vielzahl von Teilen, wobei sich die Schrauben auch lösen können.

Der Erfindung liegt die Aufgabe zugrunde, die Fernsehkamera der erwähnten Art so zu verbessern, daß eine wesentlich kleinere Lichtstärke zur Beleuchtung des Beobachtungsfeldes ausreicht.

Dabei geht die Erfindung von der Erkenntnis aus, daß die Lichtstärke mit dem Quadrat der Abbildungsgröße abnimmt, so daß schon eine mäßige Verkleinerung der Abbildungsgröße die Lichtstärke erheblich herabsetzt.

Zur Lösung dieser Aufgabe sind die kennzeichnenden Merkmale des Anspruchs 1 vorgesehen. Durch die Verwendung dieser äußerst kleinen 1/2-Zoll-Kameraröhre wird die Lichtstärke in den Fachmann überraschender Weise stark herabgesetzt, so daß die bisher erforderlichen großen Lichtfontänen ganz entfallen können. Außerdem ist die Kamera noch kleiner als die nach dem Stand der Technik, so daß die Handlichkeit noch weiter verbessert wird.

/-8

3

·mäß den weiteren Ansprüchen wird ferner erreicht, daß die Zahl der Teile, aus denen die Kamera besteht, drastisch reduziert wird. Dadurch entfällt nicht nur der erwähnte Befestigungsrahmen, sondern auch zahlreiche weitere Teile wie die Schrauben. Durch die Erfindung wird somit das Außengehäuse zum Träger sämtlicher innen liegender Teile.

Durch die weiteren besonderen Maßnahmen nach den Ansprüchen werden ferner auch die Außenabmessungen des Gehäuses verringert und erreicht, daß das Gehäuse nicht von Unbefugten geöffnet werden kann.

Durch die Erfindung wird ferner eine Monitor-Bildschirmeinheit geschaffen, die nicht nur besonders kompakt ist, sondern sie ist auch der erwähnten Miniatur-Fernsehkamera dadurch besonders angepaßt, daß die Merkmale der Ansprüche 11 bis 16 verwendet sind. Auf diese Weise werden unter anderem die elektronischen Teile oder weitere elektronische Teile der Kamera in dem Gehäuse des Monitor-Bildschirmes untergebracht, wodurch die Kamera noch kleiner und kompakter wird. Dadurch kann der Arzt die Kamera mit beiden Händen leicht be-

/-9

**0146644**

4

dienen, während eine größere Anzahl von Ärzten oder Studenten auf dem Bildschirm zum Zwecke der Diagnose oder der Operation das gut ausgeleuchtete Blickfeld der Kamera beobachten können.

Weitere Vorteile und Einzelheiten der Erfindung ergeben sich aus der nun folgenden Beschreibung eines Ausführungsbeispiels unter Hinweis auf die Zeichnung. In dieser zeigen:

Fig. 1 die Fernsehkamera mit auseinander gezogenen Teilen in perspektivischer Ansicht und

Fig. 2 eine Perspektive auf den Monitor-Bildschirm mit auseinander gezogenen Elektronik-Teilen und ausgezogenem Stecker.

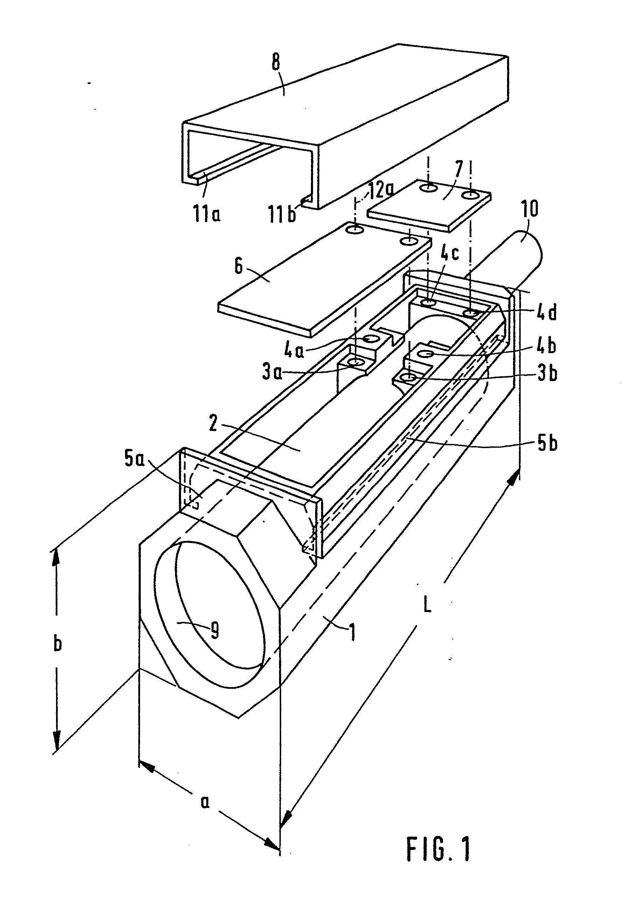

In Fig. 1 sieht man im mittleren bis unteren Bereich das Gehäuse 1 mit einem achteckigen Querschnitt und einer vorderen Öffnung 9. Die maximale Abmessung a von zwei gegenüber liegenden parallelen Kanten des achteckigen Querschnitts beträgt vorzugsweise maximal etwa 28 mm. Der maximale Abstand b von der Unterkante bis zu der Oberkante des dort angedeuteten Deckels 8

/-1o

0146644

5.

hat eine maximale Abmessung von 3o mm. Die maximale Länge 1 des Gehäuses ohne den hinteren sichtbaren Kabelknickschutz 1o am anderen Ende des Gehäuses beträgt vorzugsweise maximal 118 mm.

Dadurch wird ersichtlich, wie klein die Abmessungen dieser Miniatur-Fernsehkamera sind, und zwar in Anpassung an die Kameraröhre 2, die eine 1/2-Zoll-Röhre ist.

Die vordere Öffnung 9 ist mit einem nicht dargestellten Innengewinde versehen, wie später noch im einzelnen erläutert wird, um entweder eine Kupplung oder hier direkt ein optisches Gerät anzuschließen. Diese Öffnung 9 ist so groß gehalten, daß die Kameraröhre 2 in das Innere durch die Öffnung 9 eingeschoben werden kann, also ohne irgend welche zusätzlichen Teile. Dadurch wird das Gehäuse ebenfalls besonders klein.

Im oberen Bereich des Gehäuses 1 sieht man links und rechts je einen Schlitz 5a, 5b, die zum Eingriff der Kanten 11a, 11b des Deckels 8 vorgesehen sind, wie mit unterbrochenen, teilweise aber auch mit ausgezogenen Linien angedeutet ist. Der Decke 8 selbst ist ganz

/-11

0146644

6

oben senkrecht über seiner Einschnapplage für sich
allein dargestellt.

Durch die Erfindung entfällt der sonst übliche Befestigungsrahmen. Statt dessen zeigt das Gehäuse 1 hiermit
einstückig ausgebildete innere Ansätze oder Vorsprünge
mit den Befestigungspunkten 3a, 3b, 4a, 4b und 4c, 4d
im hinteren Bereich. Dies ist hier gut sichtbar, weil
der Deckel 8 und die Elektronik-Bausteine 6 und 7 weggelassen und senkrecht darüber dargestellt sind. Durch
die strichpunktierteLinie 12 a und weitere parallel
hierzu liegende strichpunktierte Linien sind die erwähnten Befestigungspunkte angegeben, die im montierten Zustand zusammen gehören.

Das in der Regel aus Metall bestehende Gehäuse 1 und
die erwähnten inneren Befestigungseinrichtungen mit den
erwähnten inneren Befestigungspunkten 3 und 4 sind bevorzugt aus einem Stück gefertigt. Natürlich besteht
aber auch die Möglichkeit, diese Teile ebenfalls anzukleben.

Bevorzugt entfallen bei dieser Konstruktion auch sämtliche Schrauben, so daß es sich hier bei den Befesti-

/-12

0146644

7

gungspunkten um Klebstellen handelt.

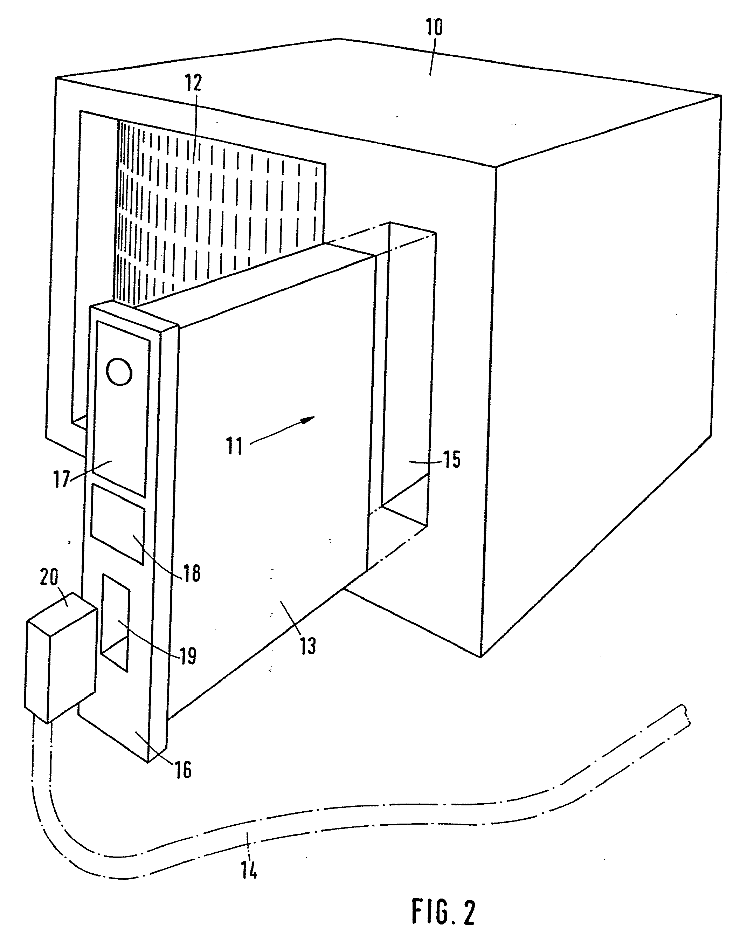

Im hinteren Bereich des Gehäuses ist der Kabelaustritt des Kabels 14 sichtbar. Dieser ist durch einen selbstklebenden Schrumpfschlauch 1o über eine Metallhülse gebildet, die ebenfalls mit dem Gehäuse einstückig ausgebildet ist. Der Schrumpfschlauch ist hier mit Heißluft verschrumpft und geklebt. Er bildet gleichzeitig einen Knickschutz für das hier nicht sichtbare und nicht dargestellte Kabel 14, das zu der Bildschirm-Einheit nach Fig. 2 führt.

Die Elektronik-Bausteine 6 und 7 sind im Bereich der senkrechten strichpunktierten Linie 12 a ebenfalls mit Befestigungspunkten oder Klebstellen versehen, wobei die Klebstellen des Elektronikbausteines 6 mit den Klebstellen 3a, 3b korrespondieren, während die Klebstellen des Elektronikbauteiles 7 mit den Klebbefestigungspunkten 4c, 4d des Gehäuses 1 korrespondieren.

Zur Befestigung der Kameraröhre 2 sind die Befesitungspunkte 4a, 4b vorgesehen, wobei es sich in der Regel um Bohrungen handelt, durch die Klebstoff gegeben wird, um die Röhre 2 zu befestigen. Nicht auszuschließen ist

/-13

0146644

*8*

selbstverständlich auch die Anordnung von Gewindebohrungen, wozu dann allerdings Schrauben Verwendung finden müssen.

Der Deckel 8 wird indessen in jedem Falle ohne Schrauben befestigt. Dazu ist er im Querschnitt U-förmig ausgebildet, wobei an der nach unten gerichteten Öffnung nach innen umgebogene Kanten 11a, 11b deutlich sichtbar sind. Diese sind dazu bestimmt, in die Längsschlitze 5a, 5b des Gehäuses 1 federnd einzugreifen, so daß dadurch allein der Deckel bereits auf dem Gehäuse 1 festsitzt. Es ist aber bevorzugt, den Deckel zusätzlich noch mit dem Gehäuse zu verkleben. Außerdem kann der Deckel natürlich auch ohne die Kanten 11a, 11b ausgebildet sein und dann nur verklebt werden. Hierzu können selbstverständlich auch die Schlitze 5a, 5b entfallen.

Durch den erwähnten achteckigen Querschnitt ist das Gehäuse 1 an den Deckel 8 angepaßt, außerdem wird dadurch ein gegenüber dem achteckigen Querschnitt etwas vergrößerter Raum zur Aufnahme der elektronischen Bauteile 6

/-14

9

und 7 geschaffen. Dadurch ermöglicht auch diese Bauform besonders kleine und kompakte Abmessungen der Fernsehkamera.

Wenn das Gehäuse 1, wie erwähnt, aus einem Stück gearbeitet ist, dann weist es eine besonders hohe Festigkeit auf.

Die vordere Öffnung 9 der Kamera ist ohne das Gewinde dargestellt. Sie hat einen Durchmesser, der der stärksten Stelle der 1/2-Zoll-Aufnahmeröhre entspricht, so daß diese durch die Öffnung 9 eingeführt werden kann. Danach wird ein mit einem Gummidichtring versehener nicht dargestellter Ring mit einer Passung in die Öffnung 9 eingesetzt, der das erwähnte Innengewinde aufweist, wobei es sich um ein genormtes C-Gewinde handelt. Infolge einer genauen Passung oder anderen Maßnahmen wie einer Verklebung ist dann der erwähnte nicht dargestellte Ring wasserdicht mit dem Gehäuse 1 der Kamera verschlossen. Gleichzeitig dient der Ring zur Halterung der Röhre 2 in der Kamera. Dieser Einsatz des Ringes ist bevorzugt, weil dadurch die Ab-

/-15

0146644

10.

messungen der Kamera noch etwas kleiner werden können. Außerdem besteht auf diese Weise die Möglichkeit, das erwähnte genormte C-Innengewinde zu verwenden, das zu einer sehr großen Anzahl von Gewinden paßt, das an Kupplungen, Objektiven, Endoskopen und dergleichen optischen Geräten in der Medizintechnik vorhanden ist, an das die Kamera anschließbar ist.

Die erwähnte Verwendung der 1/2-Zoll-Kameraröhre 2 ist bevorzugt, weil sich daraus eine kleinere Abbildung ergibt, die in überraschender Weise eine sehr viel kleinere Lichtstärke benötigt. Die Lichtstärke nimmt mit dem Quadrat der Abbildungsgröße ab. Auf diese Weise ist die Lichtbelastung im Patienten erheblich herabgesetzt. Man kann auch davon sprechen, daß die Lichtausbeute durch diese sehr kleinen Abmessungen erheblich verbessert ist. Dadurch entfällt nicht nur der Aufwand für die große Lichtfontäne nach dem Stand der Technik, sondern es wird auch die Belastung durch die mit dem Licht verbundene Wärme des Patienten stark herabgesetzt.

/-16

*II*

Fig. 2 zeigt eine Perspektive auf den Monitor-Bildschirm 12 mit zugehörigem Gehäuse 1o. Dieses Gehäuse 1o ist gemäß der Erfindung derart erweitert, daß ein zusätzliches Gehäuse 13 in dem Gehäuse 1o Aufnahme finden kann.

Bei der vorliegenden Ausführungsform wird das zusätzlich die Elektronik einer Fernsehkamera aufnehmende Gehäuse 13 durch einen Schlitz 15 nach Art einer Schublade in das Gehäuse 1o in Richtung des Pfeiles 11 eingeschoben. Der Schlitz 15 ist hierzu völlig frei sichtbar, und durch die strichpunktierten Linien ist die Richtung des Einschubes angegeben. Es ist dem Fachmann ohne weiteres verständlich, daß die Abmessungen des zusätzlichen Gehäuses 13 ein wenig kleiner, aber dem Schlitz 15 angepaßt sind, so daß der Einschub nach Art einer Schublade in Richtung des Pfeiles 11 möglich ist, bis die vordere Leiste an das Gehäuse 1o anschlägt. Auf diese Weise wird das zusätzliche Gehäuse 13 in das Gehäuse 1o völlig integriert. Dennoch ist die Zugänglichkeit sehr leicht und einfach, indem das zusätzliche Gehäuse 13 entgegen der Richtung des Pfeiles 11 aus dem Ge-

/-17

12

häuse 1o ganz einfach wieder völlig herausgezogen
wird.

Dabei ist die vordere Seite 16 des zusätzlichen Gehäuses 13 immer leicht und einfach auch in eingeschobener Lage erreichbar. Deshalb sind hier ein oder mehrere Bedienungselemente 17 und / oder ein Kontroll-Monitor 18 darunter angeordnet. Unter diesem sieht man einen Stecker 2o in herausgezogener Stellung, der in die
Buchse 19 in der Vorderseite 16 des zusätzlichen Gehäuses 13 eingeführt ist, um das Kabel 14 anzuschließen,
das mit der Fernsehkamera nach Fig. 1 verbunden ist.

Fig. 2 zeigt das Monitor-Bildschirmgehäuse 1o, das
Elektronik-Einschubteil 13 und den Stecker 2o als getrennte Teile. Es ist aber für den Fachmann ersichtlich, daß es sich um eine Einheit handelt, da in der
Gebrauchslage das zusätzliche Gehäuse 13 in Richtung
des Pfeiles 11 in das Gehäuse 1o eingeschoben ist. Darüberhinaus ist in der Gebrauchslage selbstverständlich
auch der Stecker 2o in die Buchse 19 eingeschoben, weil
anders die Verbindung mit der Fernsehkamera nach Fig. 2
gar nicht vorhanden und das Gerät sonst nicht betriebsbereit ist.                                        /-18

13

Zwischen dem Gehäuse 1o und dem Gehäuse 13 müssen irgendwelche Zwischenwände oder dergleichen nicht vorhanden sein, es genügt vielmehr, daß im Gebrauchszustand das Teil 13 in dem Gehäuse 1o integriert ist.

Dadurch entsteht auch noch der weitere Vorteil, daß ein Netzteil zur Stromversorgung eingespart wird, weil die Stromversorgung des elektronischen Teiles 13 durch den Monitor erfolgt.

Es entfallen auch sämtliche außen entlang geführte Kabelverbindungen, sowie ein zweites, sonst erforderliches Netzkabel.

Die Bedienung ist sehr einfach und übersichtlich infolge der Kompaktheit des Gesamtgerätes. Schließlich wird auch noch erheblich Platz eingespart, der sonst für das zweite Gerät erforderlich wäre.

Die Erfindung ist nicht auf die dargestellte Ausführungsform beschränkt. Zum Beispiel kann das zusätzliche Gehäuse 13 mit dem Elektronik-Steuerteil auf der Rückwand des Gehäuses 1o oder auch unter dem Gehäuse 1o angeordnet sein. In diesem Falle würde man davon sprechen kön-

/-19

**0146644**

*14*

hen, daß das zusätzliche Gehäuse 13 an dem Gehäuse 1o angeordnet ist. Es ist auch von Vorteil, daß eine Zwischenwand zwischen dem Gehäuse 1o und dem Gehäuse 13 nicht vorhanden ist, dies bedeutet ebenfalls eine Einsparung.

Die Erfindung ist nicht auf die dargestellte Ausführungsform beschränkt, vielmehr kann der Fachmann im Rahmen der Ansprüche Abwandlungen hiervon ausführen.

**0146644**

Patentansprüche

1. Fernsehkamera sehr kleiner Abmessungen, insbesondere für medizinische Zwecke, mit einer Kameraröhre (2), die von einem Gehäuse (1) zur Aufnahme der Kameraröhre sowie Elektronik-Bausteinen (6,7) umgeben ist, einem Kameradeckel und einem Kabelknickschutz in der Kabelzuführung zu dem Gehäuse, dadurch gekennzeichnet, daß die Kameraröhre (2) eine 1/2-Zoll-Röhre ist, und daß die inneren Abmessungen der Kamera eine lichte Weite haben, die dem stärksten Durchmesser der Kameraröhre (2) so angepaßt sind, daß die Kamera durch die vordere Öffnung (9) des Gehäuses (1) einführbar ist.

2. Fernsehkamera nach Anspruch 1, dadurch gekennzeichnet, daß das Gehäuse (1) alle Befestigungseinrichtungen (3-9) für die Elektronikbausteine (6,7) und den Deckel (9) enthält, die als Ansätze des Gehäuses (1) ausgebildet sind.

3. Fernsehkamera nach Anspruch 2, dadurch gekennzeichnet, daß die Ansätze des Gehäuses (1) schraubenlose Befestigungspunkte (3a, 3b, 4a, 4b, 4c, 4d) aufweisen.

/-2

BAD ORIGINAL

**0146644**

- 2 -

4. Fernsehkamera nach Anspruch 1, dadurch gekennzeichnet, daß der Kabelknickschutz (10) einen selbstklebenden Schrumpfschlauch aufweist, der das Kabel (14) gegenüber dem Gehäuse (1) abdichtet.

5. Fernsehkamera nach Anspruch 1, dadurch gekennzeichnet, daß Aufnahmeschlitze (5a, 5b) zur Aufnahme der Außenkanten (11a, 11b) des Kameradeckels (8) in dem Gehäuse (1) angeordnet sind.

6. Fernsehkamera nach Anspruch 1, dadurch gekennzeichnet, daß in die vordere Öffnung (9) ein Ring mit einer Außenfassung eingefügt ist, der ein genormtes Innengewinde zum Anschluß an die Kupplung oder ein optisches Gerät aufweist.

7. Fernsehkamera nach Anspruch 1, dadurch gekennzeichnet, daß das Gehäuse (1) außen im Querschnitt achteckig ausgebildet ist und daß die maximale Stärke (a) zwischen zwei zueinander parallelen Außenkanten etwa 28 mm beträgt.

/-3

0146644

- 3 -

8. Fernsehkamera nach Anspruch 7, dadurch gekennzeichnet, daß der maximale Abstand (h) zwischen der Unterkante des Gehäuses (1) und der Oberkante des parallel zur Unterkante liegenden Deckels (8) 30 mm beträgt.

9. Fernsehkamera nach Anspruch 5 oder einem der vorangegangenen Ansprüche, dadurch gekennzeichnet, daß der Kameradeckel (8) im Querschnitt-U-förmig ausgebildet ist und daß in die Öffnung gerichtete Kanten (11a, 11b) zum federnden Eingriff in die Schlitze (5a, 5b) des Gehäuses (1) angeordnet sind.

10. Fernsehkamera nach einem der vorangegangenen Ansprüche, dadurch gekennzeichnet, daß der Deckel (8) mit der Gehäuse (1) verklebt ist.

11. Monitor-Bildschirmeinheit mit einem Gehäuse für die Fernsehkamera nach Anspruch 1, dadurch gekennzeichnet, daß in oder an dem Gehäuse (10) des Monitor-Bildschirms (12) ein zusätzliches Gehäuse (13) zur Aufnahme der elektronischen Teile der Kamera angeordnet ist.

/-4

- 4 -

12. Bildschirm nach Anspruch 1o, dadurch gekennzeichnet, daß das zusätzliche Gehäuse (13) in einem Gehäuse (1o) des Monitor-Bildschirms (12) durch einen Schlitz (15) desselben nach Art einer Schublade einschiebbar ist.

13. Monitor-Bildschirm nach Anspruch 12, dadurch gekennzeichnet, daß der Schlitz (15) neben dem Monitorbildschirm (12) an der Vorderseite des Gehäuses (1c) angeordnet ist.

14. Monitor-Bildschirm nach Anspruch 11, dadurch gekennzeichnet, daß an der von außen zugänglichen Seite (16) des zusätzlichen Gehäuses (13) ein oder mehrere Bedienungselemente (17) angeordnet sind.

15. Monitor-Bildschirm nach einem der vorangegangenen Ansprüche, dadurch gekennzeichnet, daß ein Kontroll-Monitor (18) an der von außen zugänglichen Seite (16) des zusätzlichen Gehäuses (13) angeordnet ist.

/-5

- 5 -

16. Monitor-Bildschirm nach Anspruch 11, dadurch gekennzeichnet, daß an der außen zugänglichen Seite (16) des zusätzlichen Gehäuses (13) eine Buchse (19) für einen Stecker (2o) des Kamerakabels (14) angeordnet ist.

FIG. 1

FIG. 2

Europäisches
Patentamt

**0146644**
Nummer der Anmeldung

**EUROPÄISCHER RECHERCHENBERICHT**

EP    83 11 2282

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 344 194   (AATON)<br><br>* Seite 2, Zeilen 14-34; Bild 1 * | 1,7,8, 11,14 | H 04 N   5/225 |
| A | US-A-4 344 092   (MILLER)<br>*  Spalte 2, Zeilen 27-31; Spalte 4,  Zeilen  5-9, 16-21; Spalte 5, Zeilen 8-13; Figuren 1-3,5 * | 1 | |
| A | FR-A-2 123 150   (INSPECTRONIC)<br>*  Seite  2,  Zeilen 9-17, 27-33; Figuren 1,2 * | 1,7,8 | |
| A | US-A-4 229 762   (HEALY)<br>* Spalte 2, Zeilen 23-29 * | 1,7,8 | |

|  | RECHERCHIERTE SACHGEBIETE (Int. Cl.4) |
|---|---|
|  | H 04 N   52/25<br>H 04 N    7/18 |

Der vorliegende Recherchenbericht wurde für alle Patentansprüche erstellt.

| Recherchenort<br>DEN HAAG | Abschlußdatum der Recherche<br>27-07-1984 | Prüfer<br>YVONNET J.W. |
|---|---|---|